Europäisches Patentamt

European Patent Office

Office européen des brevets

(19)

(11) EP 1 598 884 A1

(12) EUROPEAN PATENT APPLICATION
published in accordance with Art. 158(3) EPC

(43) Date of publication:
23.11.2005 Bulletin 2005/47

(51) Int Cl.⁷: $H01M\ 4/58$, H01M 4/02,
H01M 10/40, H01M 4/62

(21) Application number: 04703249.5

(22) Date of filing: 19.01.2004

(86) International application number:
PCT/JP2004/000358

(87) International publication number:
WO 2004/070863 (19.08.2004 Gazette 2004/34)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 03.02.2003 JP 2003025761
11.07.2003 JP 2003195652
21.11.2003 JP 2003392395

(71) Applicant: SANYO ELECTRIC CO., LTD.
Moriguchi-shi, Osaka 570-8677 (JP)

(72) Inventors:
• TAKAHASHI, Yasufumi
Hyogo 6512109 (JP)
• FUJIMOTO, Hiroyuki
Kobe-shi, Hyogo 6530014 (JP)

• KINOSHITA, Akira
Kobe-shi, Hyogo 6512116 (JP)
• FUJIHARA, Toyoki
Kobe-shi, Hyogo 6512114 (JP)
• TODE, Shingo
Hyogo 6520047 (JP)
• NAKANE, Ikuro
Kobe-shi, Hyogo 6540102 (JP)
• FUJITANI, Shin
Kobe-shi, Hyogo 6512109 (JP)

(74) Representative: Merkle, Gebhard
TER MEER STEINMEISTER & PARTNER GbR,
Patentanwälte,
Mauerkircherstrasse 45
81679 München (DE)

(54) NONAQUEOUS ELECTROLYTE SECONDARY BATTERY

(57) A nonaqueous electrolyte secondary battery comprising a positive electrode containing a positive electrode active material, a negative electrode containing a negative electrode active material, and a nonaqueous electrolyte is **characterized in that** the positive electrode active material is composed of a lithium trasition metal oxide having a layer structure and containing Li and Co and further contains a group IVA element and group IIA element of the periodic table.

FIG. 1

EP 1 598 884 A1

## Description

## TECHNICAL FIELD

The present invention relates to a nonaqueous electrolyte secondary battery and also to a method of using the same.

## BACKGROUND ART

In recent years, nonaqueous electrolyte secondary batteries using metallic lithium, an alloy capable of storing and releasing lithium or a carbon material as the negative active material anda lithiumtransitionmetal complex oxide represented by $LiMO_2$ (M indicates a transition metal) as the positive active material have been noted as high-energy-density batteries.

A representing example of the lithium transition metal complex oxide is lithium cobaltate ($LiCoO_2$), which has been already put to practical use as the positive active material for nonaqueous electrolyte secondary batteries. However, in the case where the lithium cobaltate is used alone, a capacity is observed to decrease with charge-discharge cycles.

This has led to attempts to remedy such a capacity loss by adding elements other than cobalt. For example, Japanese Patent Registration No. 2855877 discloses addition of zirconium to lithium cobaltate.

Japanese Patent Registration No. 3045998 proposes addition of Ti, Zr or a combination thereof, and Mg, Ca, Sr, Ba or any combination thereof to lithium cobaltate.

For nonaqueous electrolyte secondary batteries using a lithium transition metal oxide, e.g., lithium cobaltate, as the positive active material and a carbon material or the like as the negative active material, an end-of-charge voltage is generally prescribed at 4.1 - 4.2 V. In this instance, the positive active material utilizes only 50 - 60 % of its theoretical capacity. Accordingly, if the end-of-charge voltage is prescribed at a higher value, a capacity (utilization factor) of the positive electrode can be improved to thereby increase the battery capacity and energy density. However, the higher end-of-charge voltage increases a depth of charge of the positive electrode. This renders the positive active material more prone to experience structural deterioration and increases a tendency of an electrolyte solution to decompose on a surface of the positive electrode, for example. As a result, amore significant deterioration is caused to occur with charge-discharge cycles, relative to the degree of deterioration observed in conventional cases where the end-of-charge voltage is prescribed at 4.1 - 4.2 V.

## DISCLOSURE OF THE INVENTION

It is an object of the present invention to provide a nonaqueous electrolyte secondary battery which can be operated at a prescribed end-of-charge voltage of at least 4.3 V without deterioration in charge-discharge cycle characteristics to thereby exhibit an increased charge-discharge capacity, as well as providing a method of using the same.

The present invention provides a nonaqueous electrolyte secondary battery including a positive electrode containing a positive active material, a negative electrode containing a negative active material and a nonaqueous electrolyte. Characteristically, the positive active material comprises a lithium transition metal oxide containing Li and Co and having a layered structure and further comprises a group IVA element and a group IIA element of the periodic table.

The use of the above-specified positive active material, in accordance with the present invention, permits charge-discharge cycling without deterioration of charge-discharge cycle characteristics, even if the charge-discharge cycling is performed with an end-of-charge voltage of at least 4 . 3 V, and accordingly results in the increased charge-discharge capacity relative to using conventional ones.

The reason for the deterioration in charge-discharge cycle characteristics that occurs conventionally when lithium cobaltate or the like is used as the positive active material and an end-of-charge voltage is increased to 4.3 V or above is not clear at present time. It is however presumed that when the positive active material is oxidized by charging of a battery, the transition metal element (Co) in a higher oxidation state causes decomposition of the electrolyte solution by its catalytic action at a surface of the active material and also causes breakage of crystal structure of the positive active material. Further addition of the group IVA element and group IIA element of the periodic table to the positive active material, in accordance with the present invention, is presumed to change the oxidation state of the transition metal element and thereby suppress decomposition of the electrolyte solution or breakage of crystal structure of the positive active material.

Specific examples of group IVA elements of the periodic table include Ti, Zr and Hf. Particularly preferred among them is Zr. Specific examples of group IIA elements of the periodic table include Be, Mg, Ca, Sr, Ba and Ra. Preferred among them are Mg, Ca, Sr and Ba. Mg is particularly preferred.

In the present invention, the group IVA element of the periodic table preferably adheres as a compound to a surface of the lithium transition metal oxide. That is, it is preferred that the group IVA element is contained in the positive active material in the form of a compound adhered to the surface of the lithium transition metal oxide. It is also preferred that the group IVA compound exists in the form of particles adhered to the surface of the lithium transition metal oxide.

Adherence of the group IVA element to the surface of the lithium transition metal oxide is believed to facilitate transfer of lithium ions and electrons at the surface of the positive active material during charge and discharge and thus suppress oxidative decomposition of the electrolyte solution, which is adeteriorationreaction, instead of help stabilizing the crystal structure of the lithium transition metal oxide.

Also, it has been confirmed that the group IIA element, when added concurrently, diffuses into both of the compound containing the group IVAelement and the lithium transitionmetal oxide and enables them to be firmly sintered together. This is believed to demonstrate that the addition of the group IIA element enhances adhesion between the compound containing the group IVA element and the lithium transition metal oxide and markedly improves the effect whereby decomposition of the electrolyte solution is suppressed. However, the group IIA element itself is an unlikely contributor to the improvement of cycle characteristics, because the sole addition of the group IIA element does not result a noticeable improvement in cycle characteristics, as will be described hereinafter.

Japanese Patent Registration No. 2855877 reports that charge-discharge cycle characteristics can be improved by coating a surface of lithium cobaltate with a compound such as $ZrO_2$ or $Li_2ZrO_3$. It appears that this contemplates to suppress decomposition of an electrolyte solution and prevent crystal destruction by covering lithium cobaltate with $ZrO_2$ or the like compound such that its surface is kept out of contact with the electrolyte solution. On the other hand, in the present invention, the group IVA compound having a size from a submicron order to several micrometers adheres to the surface of the lithium transition metal oxide. The compound does not cover an entire surface of the lithium transition metal oxide.

Japanese Patent Registration No. 3045998 reports that charge-discharge cycle characteristicscan beimproved by doping the lithium transition metal oxide with the group IVA element and group IIA element of the periodic table. Probably, this contemplates to suppress decomposition of an electrolyte solution, prevent crystal destruction and improve charge-discharge cycle characteristics by better balancing electric charges at the surface of the lithium transition metal oxide to thereby prevent overcharging. Thus, Japanese Patent Registration No. 3045998 teaches doping the aforementioned elements into the lithium transition metal oxide, as contrary to the present invention in which the group IVA compound is adhered onto the surface of the lithium transition metal oxide.

In the present invention, because the lithium transition metal oxide is not doped with the group IVA element, no reduction in reversible capacity is observed. Also because a major surface portion of the lithium transition metal oxide contacts with the electrolyte solution, cycle characteristics can be improved without being accompanied by deterioration in charge-discharge characteristics. In these respects, the present invention differs largely from the technologies disclosed in Japanese Patent Registration Nos. 2855877 and 3045998.

In the present invention, lithium cobaltate is preferred for use as the lithium transition metal oxide containing Li and Co and having a layered structure. Accordingly, the positive active material for use in the present invention preferably contains lithium cobaltate, the group IVA element and group IIA element of the periodic table. If a major proportion (at least 50 mole %) of the transition metal is nickel that exhibits a higher catalytic action than cobalt, the occurrence of decomposition of the electrolyte solution increases. If a major proportion of the transition metal is manganese, dissolution of manganese or degradation of crystal structure is occasioned increasingly. Where a metal other than nickel and manganese constitute a major proportion of the transition metal, lithium cobaltate comprised mainly of cobalt gives the higher capacity than the others. Therefore, lithium cobaltate is preferably used in the present invention.

In the present invention, the group IVA element and group IIA element of the periodic table are preferably contained in the positive active material in the total amount of not greater than 3 mole %, more preferably less than 2 mole %, based on the total amount of the aforementioned elements and the transition metal in the lithium transition metal oxide. If the group IVA element and group IIA element increase in amount excessively, deterioration of charge-discharge characteristics may result. Also, the group IVA element and group IIA element are preferably contained in the total amount of at least 0.5 mole %. If the total content of these elements decreases excessively, the effect of the present invention whereby an end-of-charge voltage can be increased to at least 4.3 V without deterioration in charge-discharge cycle characteristics may not be obtained sufficiently.

In the case where the positive active material in the present invention comprises lithium cobaltate containing the group IVA element and group IIA element, it can be a compound represented by a general formula $Li_aM_xN_yCo_zO_2$ ($0 < a \leq 1.1$, $x > 0$, $y > 0$, $0.97 \leq z \leq 1.0$ and $0 < x + y \leq 0.03$), for example. In this instance, the total content of the group IVA element and group IIA element does not exceed 3 mole %. If the content is kept within the preferred range of 0.5 - 3 mole %, as described above, x and y satisfy the relationship $0.005 \leq x + y \leq 0.03$.

In the present invention, the positive active material preferably contains substantially equimolar amounts of the group IVA element and group IIA element. By "substantially equimolar amounts", it is meant that x and y in the above general formula satisfy the following equations:

$$0.45 \leq x / (x + y) \leq 0.55$$

$$0.45 \leq y / (x + y) \leq 0.55.$$

That is, x and y satisfy the following equation:

$$(0.45/0.55 =) \; 0.82 \leq x/y \leq 1.2 \; (= 0.55/0.45).$$

Inclusion of substantially equimolar amounts of the group IVA element and group IIA element results in obtaining the effect of the present invention more sufficiently.

In the present invention, the positive active material preferably has a specific surface area of not greater than 1.0 $m^2$/g. If the specific surface area is kept within 1.0 $m^2$/g, a contact area between the positive active material and the electrolyte solution becomes smaller to result in further suppressing decomposition of the electrolyte solution.

In the present invention, when the end-of-charge voltage is prescribed at 4. 4V, a ratio in charge capacity of the negative electrode to the positive electrode (negative electrode charge capacity/positive electrode charge capacity) in their portions opposed to each other is preferably within the range of 1.0 - 1.2. If the ratio in charge capacity of the negative to positive electrode is kept at not less than 1.0, deposition of metallic lithium on a surface of the negative electrode can be restrained. Accordingly, the cycle characteristics and safety level of the battery can be improved. In this case, the negative electrode excludes metallic lithium from its active material.

The nonaqueous electrolyte solvent for use in the present invention can be selected from those conventionally used in lithium secondary batteries. Particularlypreferred among them is a mixed solvent of a cyclic carbonate and a chain carbonate. Examples of cyclic carbonates include ethylene carbonate, propylene carbonate, butylene carbonate and vinylene carbonate. Examples of chain carbonates include dimethyl carbonate, methyl ethyl carbonate and diethyl carbonate.

Generally, the chain carbonate tends to decompose at a high potential. Therefore, in the case where the battery is charged at a high voltage of 4.3 V or above, the cyclic carbonate content of the solvent is preferably kept within the range of 10 - 30 % by volume. Where a graphite material is used as the negative active material, ethylene carbonate (EC) is preferably used as the cyclic carbonate. However, ethylene carbonate tends to decompose at a high potential. In order to retard decomposition at a high potential, ethylene carbonate may be replaced by propylene carbonate and/or butylene carbonate which are less susceptible to oxidative decomposition. A blending proportion of cyclic carbonate may be lowered alternatively.

The nonaqueous electrolyte solute for use in the present invention can be selected from lithium salts generally used as solutes in lithium secondary batteries. Examples of lithium salts include $LiPF_6$, $LiBF_4$, $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $LiAsF_6$, $LiClO_4$, $Li_2B_{10}Cl_{10}$, $Li_2B_{12}Cl_{12}$ and mixtures thereof. Among them, $LiPF_6$ (lithium hexafluorophosphate) is preferably used. Charging at a higher voltage increases a tendency of an aluminum current collector to dissolve. However, $LiPF_6$, if present, decomposes to form a film on an aluminum surface. This film serves to restrain aluminum from dissolving. It is therefore preferable to use $LiPF_6$ as the lithium salt.

In the present invention, the positive electrode may also contain an electrical conductor. In case of a carbon material conductor, the carbon material is preferably contained in the positive electrode in an amount not to exceed 5 % of the total weight of the positive active material, conductor and binder. This is because the electrolyte solution on a surface of the carbon material becomes more susceptible to a decomposition reaction particularly when a battery is charged at a high end-of-charge voltage.

The method of the present invention is a method of using the nonaqueous electrolyte secondary battery of the present invention and is characterized in that the battery is charged at an end-of-charge voltage of at least 4.3 V.

That is, the using method of the present invention is characterized in that a nonaqueous electrolyte secondary battery including a positive electrode containing a positive electrode electrolyte, the positive electrode containing an active material which comprises a lithium transition metal oxide containing Li and Co and having a layered structure and further comprises a group IVA element and a group IIA element of the periodic table, a negative electrode containing a negative electrode electrolyte and a nonaqueous electrolyte is charged at an end-of-charge voltage of at least 4.3 V.

The nonaqueous electrolyte secondary battery of the present invention can be charged at an end-of-charge voltage of at least 4.3 V without deterioration in charge-discharge cycle characteristics. Thus, in accordance with the using method of the present invention, the battery can be charged and discharged using an end-of-charge voltage of at least 4.3 V with good charge-discharge cycle characteristics. Therefore, a higher charge-discharge capacity than conventional ones can be obtained for the battery.

**BRIEF DESCRIPTION OF THE DRAWINGS**

Figure 1 is a graph showing charge-discharge cycle characteristics of the battery in accordance with the present invention;

Figure 2 is a graph showing charge-discharge cycle characteristics of the battery in accordance with the present invention;

Figure 3 is a graph showing charge-discharge cycle characteristics of the battery in accordance with the present invention;

Figure 4 shows an SEM reflection electron image of the positive active material used in Example 1 in accordance with the present invention (shown scale indicates 1 μm);

Figure 5 shows a TEM image of the positive active material used in Example 1 in accordance with the present invention (shown scale indicates 0.1 μm);

Figure 6 shows an SEM reflection electron image of the positive active material used in Example 4 in accordance with the present invention (shown scale indicates 1 μm);

Figure 7 shows a TEM image of the positive active material used in Comparative Example 2;

Figure 8 is a graph showing the EDS measurement result for spot 1 in Figure 5;

Figure 9 is a graph showing the EDS measurement result for spot 2 in Figure 5;

Figure 10 is a graph showing the EDS measurement result for spot 1 in Figure 7; and

Figure 11 is a graph showing the EDS measurement result for spot 2 in Figure 7.

**BEST MODE FOR CARRYING OUT THE INVENTION**

The present invention is below described in more detail by way of Examples. It will be recognized that the following examples merely illustrate the present invention and are not intended to be limiting thereof. Suitable changes can be effected without departing from the scope of the present invention.

(EXPERIMENT 1)

(EXAMPLE 1)

(Preparation of Positive Active Material)

$Li_2CO_3$, $Co_3O_4$, $ZrO_2$ and MgO were mixed in an Ishikawa automated mortar such that a molar ratio Li : Co : Zr : Mg was brought to 1:0.99:0.005:0.005, heat treated in the ambient atmosphere at 850 °C for 24 hours and then pulverized to obtain a lithium transition metal oxide having a mean particle diameter of 13.9 μm and a BET specific surface area of 0.4 $m^2$/g.

(Fabrication of Positive Electrode)

The above-prepared positive active material, carbon as an electrical conductor and polyvinylidene fluoride as a binder, at a ratio by weight of 90:5:5, were added to N-methyl-2-pyrrolidone which was subsequently kneaded to prepare a cathode mix slurry. The prepared slurry was coated on an aluminum foil as a current collector, dried and then rolled by a pressure roll. Subsequent attachment of a current collecting tab completed fabrication of a positive electrode.

(Fabrication of Negative Electrode)

Artificial graphite as a negative active material and a styrene-butadiene rubber as a binder were mixed in an aqueous solution of carboxymethylcellulose as a thickener such that the mixture contained the active material, binder and thickener in the ratio by weight of 95:3:2. The mixture was then kneaded to prepare an anode mix slurry. The prepared slurry was applied onto a copper foil as a current collector, dried and rolled by a pressure roll. Subsequent attachment of a current collecting tab completed fabrication of a negative electrode.

(Preparation of Electrolyte Solution)

Ethylene carbonate (EC) and diethyl carbonate (DEC) were mixed at a 3:7 ratio by volume to provide a mixed solvent in which lithium hexafluorophosphate ($LiPF_6$) was subsequently dissolved in the concentration of 1 mole/liter to thereby prepare an electrolyte solution.

(Construction of Battery)

The above-fabricate positive and negative electrodes were arranged to interpose a separator between them and then wound to provide a wound electrode assembly. In a glove box maintained under an argon atmosphere, this wound electrode assembly and the electrolyte solution were encapsulated in an outer casing made of an aluminum laminate. As a result, a nonaqueous electrolyte secondary battery A1 was constructed having standard dimensions of 3.6 mm in thickness, 3.5 cm in width and 6.2 cm in length.

In the above procedure, the respective amounts of the positive and negative active materials used are selected such that when operated at an end-of-charge voltage of 4.4 V, the ratio in charge capacity of the negative to positive electrode (charge capacity of negative electrode/charge capacity of positive electrode) is 1.15. This ratio in charge capacity of the negative to positive electrode also applies to the following Examples and Comparative Examples.

(EXAMPLE 2)

In the preparation of positive active material, $Li_2CO_3$, $Co_3O_4$, $ZrO_2$ and MgO were mixed such that a molar ratio Li : Co : Zr :Mg was brought to 1:0.99:0.0075:0.0025. Otherwise, the procedure of Example 1 was followed to prepare a positive active material. Using this positive active material, a nonaqueous electrolyte secondary battery A2 was constructed. The obtained positive active material had a mean particle diameter of 14.0 $\mu$m and a BET specific surface area of 0.39 $m^2$/g.

(EXAMPLE 3)

In the preparation of positive active material, $Li_2CO_3$, $Co_3O_4$, $ZrO_2$ and MgO were mixed such that a molar ratio Li : Co : Zr:Mg was brought to 1:0.99:0.0025:0.0075. Otherwise, the procedure of Example 1 was followed to prepare a positive active material. Using this positive active material, a nonaqueous electrolyte secondary battery A3 was constructed. The obtained positive active material had a mean particle diameter of 14.2 $\mu$m and a BET specific surface area of 0.32 $m^2$/g.

(EXAMPLE 4)

In the preparation of positive active material, $Li_2CO_3$, $Co_3O_4$, $HfO_2$ and MgO were mixed such that a molar ratio Li : Co : Hf : Mg was brought to 1:0.99:0.005:0.005. Otherwise, the procedure of Example 1 was followed to prepare a positive active material. Using this positive active material, a nonaqueous electrolyte secondary battery A4 was constructed. The obtained positive active material had a mean particle diameter of 13.6 $\mu$m and a BET specific surface area of 0.39 $m^2$/g.

(EXAMPLE 5)

In the preparation of positive active material, $Li_2CO_3$, $Co_3O_4$, $TiO_2$ and MgO were mixed such that a molar ratio Li : Co: Ti :Mg was brought to 1:0.99:0.005:0.005. Otherwise, the procedure of Example 1 was followed to prepare a positive active material. Using this positive active material, a nonaqueous electrolyte secondary battery A5 was constructed. The obtained positive active material had a mean particle diameter of 13.6 $\mu$m and a BET specific surface area of 0.56 $m^2$/g.

(EXAMPLE 6)

In the preparation of electrolyte solution, ethylene carbonate (EC) and diethyl carbonate (DEC) were mixed at a 2:8 ratio by volume. Otherwise, the procedure of Example 1 was followed to construct a nonaqueous electrolyte secondary battery A6.

(EXAMPLE 7)

In the preparation of electrolyte solution, ethylene carbonate (EC) and diethyl carbonate (DEC) were mixed at a 1:9 ratio by volume. Otherwise, the procedure of Example 1 was followed to construct a nonaqueous electrolyte secondary battery A7.

(EXAMPLE 8)

In the preparation of electrolyte solution, ethylene carbonate (EC) and diethyl carbonate (DEC) were mixed at a 5:5 ratio by volume. Otherwise, the procedure of Example 1 was followed to construct a nonaqueous electrolyte secondary battery A8.

(EXAMPLE 9)

In the preparation of positive active material, $Li_2CO_3$, $Co_3O_4$, $ZrO_2$ and MgO were mixed such that a molar ratio Li : Co : Zr :Mg was brought to 1:0.98:0.01:0.01. Otherwise, the procedure of Example 1 was followed to prepare a positive active material. Using this positive active material, a nonaqueous electrolyte secondary battery A9 was constructed. The obtained positive active material had a mean particle diameter of 13.6 μm and a BET specific surface area of 0.45 $m^2$/g.

(COMPARATIVE EXAMPLE 1)

In the preparation of positive active material, $Li_2CO_3$ and $Co_3O_4$ were mixed such that a molar ratio Li:Co was brought to 1:1. Otherwise, the procedure of Example 1 was followed to prepare a positive active material. Using this positive active material, a nonaqueous electrolyte secondary battery X1 was constructed. The obtained positive active material had a mean particle diameter of 11.1 μm and a BET specific surface area of 0.33 $m^2$/g.

(COMPARATIVE EXAMPLE 2)

In the preparation of positive active material, $Li_2CO_3$, $Co_3O_4$ and $ZrO_2$ were mixed such that a molar ratio Li: Co:Zr was brought to 1:0.99:0.01. Otherwise, the procedure of Example 1 was followed to prepare a positive active material. Using this positive active material, a nonaqueous electrolyte secondary battery X2 was constructed. The obtained positive active material had a mean particle diameter of 13.8 μm and a BET specific surface area of 0.43 $m^2$/g.

(COMPARATIVE EXAMPLE 3)

In the preparation of positive active material, $Li_2CO_3$, $Co_3O_4$ and MgO were mixed such that a molar ratio Li: Co:Mg was brought to 1:0.99:0.01. Otherwise, the procedure of Example 1 was followed to prepare a positive active material. Using this positive active material, a nonaqueous electrolyte secondary battery X3 was constructed. The obtained positive active material had a mean particle diameter of 11.3 μm and a BET specific surface area of 0.28 $m^2$/g.
For the batteries of Examples 1 - 5 and Comparative Examples 1 - 3, the group IVA element content, the group I IA element content, the BET specific surface area and the mean particle diameter of the positive active material in each battery are listed in Table 1.

Table 1

| | Battery | Type of IVA Group Element in Positive Active Material | Content (mole%) of IVA Group Element in Positive Active Material | Mg Content (mole%) of Positive Active Material | BET Specific Surface Area ($m^2$/g) | Mean Particle Diameter (μm) |
|---|---|---|---|---|---|---|
| Example 1 | A1 | Zr | 0.5 | 0.5 | 0.40 | 13.9 |
| Example 2 | A2 | | 0.75 | 0. 25 | 0. 39 | 14. 0 |
| Example 3 | A3 | | 0.25 | 0.75 | 0. 32 | 14. 2 |

Table 1 (continued)

|  | Battery | Type of IVA Group Element in Positive Active Material | Content (mole%) of IVA Group Element in Positive Active Material | Mg Content (mole%) of Positive Active Material | BET Specific Surface Area $(m^2/g)$ | Mean Particle Diameter ($\mu$m) |
|---|---|---|---|---|---|---|
| Example 4 | A4 | Hf | 0.5 | 0.5 | 0.39 | 13. 6 |
| Example 5 | A5 | Ti | 0.5 | 0.5 | 0.56 | 13.6 |
| Example 9 | A9 | Zr | 1.0 | 1.0 | 0.45 | 13.6 |
| Comparative Example 1 | X1 | - | 0 | 0 | 0.33 | 11.1 |
| Comparative Example 2 | X2 | Zr | 1.0 | 0 | 0.43 | 13.8 |
| Comparative Example 3 | X3 | - | 0 | 1.0 | 0.28 | 11.3 |

(Evaluation of Cycle Characteristics)

The following procedure was utilized to evaluate charge-discharge cycle characteristics for the batteries of Examples 1 - 5 and Comparative Examples 1 - 3 as constructed in the manner as described above.

Each battery was charged at a constant current of 650 mA to a voltage of 4.4 V, further charged at a constant voltage of 4.4 V to a current value of 32 mA and then discharged at a constant current of 650 mA to a voltage of 2.75 V to measure a charge-discharge capacity (mAh) of the battery.

The above unit cycle was repeated to determine capacity retentions after 100 cycles and 250 cycles. These capacity retentions after 100 cycles and 250 cycles were calculated using the following equations:

$$\text{Capacity retention (\%) after 100 cycles} = \text{(100th-cycle discharge capacity)/(1st-cycle discharge capacity)} \times 100$$

$$\text{Capacity retention (\%) after 250 cycles} = \text{(250th-cycle discharge capacity)/(1st-cycle discharge capacity)} \times 100.$$

For the batteries of Comparative Examples 1 and 3, a test was discontinued after 100 cycles due to a marked capacity deterioration caused by charge-discharge cycling.

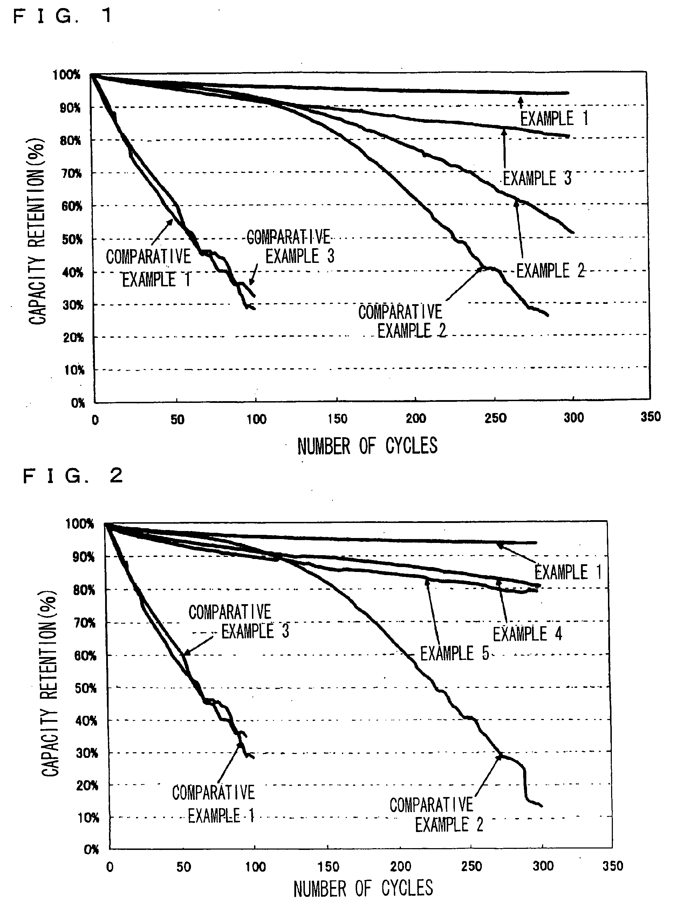

The capacity retentions after 100 cycles and 250 cycles for each battery are shown in Table 2. In Figures 1 and 2, the capacity retention vs. cycle curves for the batteries A1 - A5 and X1 - X3 are shown.

Table 2

| | Battery | Type of IVA Group Element in Positive Active Material | Content (mole%) of IVA Group Element in Positive Active Material | Mg Content (mole%) of Positive Active Material | Capac i ty Retention (%) After 100 cycles | Capac i ty Retention (%) After 250 cycles |
|---|---|---|---|---|---|---|
| Example 1 | A1 | Zr | 0.5 | 0.5 | 95.9% | 94.0% |
| Example 2 | A2 | | 0.75 | 0.25 | 93.0% | 65.7% |
| Example 3 | A3 | | 0.25 | 0.75 | 92.2% | 85.4% |
| Example 4 | A4 | Hf | 0.5 | 0.5 | 91.5% | 84.2% |
| Example 5 | A5 | Ti | 0.5 | 0.5 | 90.0% | 81.7% |
| Example 9 | A9 | Zr | 1.0 | 1.0 | 93.6% | 81.4% |
| Comparative Example 1 | X1 | - | 0 | 0 | 28.5% | - |
| Comparative Example 2 | X2 | Zr | 1.0 | 0 | 92.4% | 40.5% |
| Comparative Example 3 | X3 | - | 0 | 1.0 | 32.5% | - |

As can be clearly seen from Table 2 and Figure 1, the batteries A1, A2 and A3 exhibit higher capacity retentions compared to comparative batteries X1- X3. It is evident that improved charge-discharge cycle characteristics are obtained for the batteries in accordance with the present invention. As can also be appreciated from comparison between the batteries A1, A2 and A3, the inclusion of substantially equal amounts of Zr and Mg results in the further improved charge-discharge cycle characteristics.

As can be clearly seen from Table 2 and Figure 2, the batteries A4 and A5 in accordance with the present invention, which use Hf or Ti in exchange for Zr, also exhibit improved charge-discharge cycle characteristics, as similar to the battery A1. As can also be appreciated from comparison between the batteries A1, A4 and A5, particularly improved charge-discharge cycle characteristics are obtained when Zr is used as the group IVA element of the periodic table.

It is also evident from comparison of the batteries A1 - A3 to the battery A9 that particularly improved charge-discharge cycle characteristics are obtained when the total content of the group IVA element and group IIA element of the periodic table in the positive active material is less than 2 mole %.

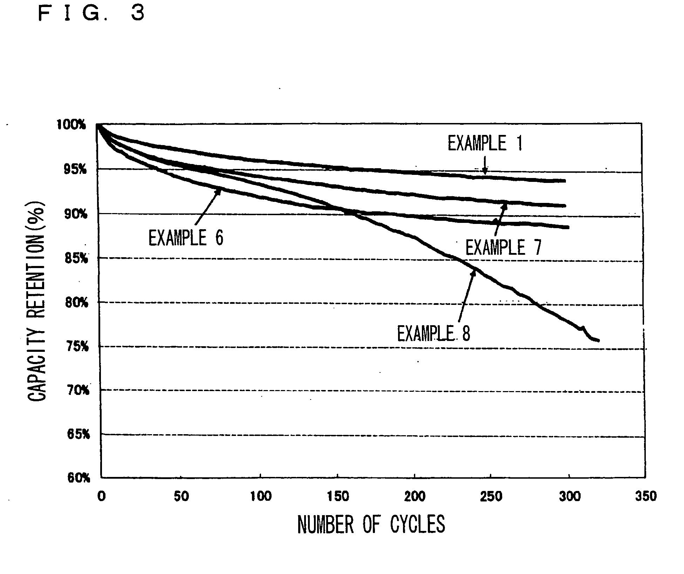

Next, the batteries A6, A7 and A8 using electrolyte solutions containing different ratios of EC and DEC were evaluated for charge-discharge cycle characteristics, as similarly to the above. Their capacity retentions after 250 cycles are shown in Table 3. Also in Figure 3, the capacity retention vs. cycle curves for those batteries are shown.

In Table 3 and Figure 3, the results for the battery A1 are also shown.

Table 3

| | Battery | EC Content (volume%) of Electrolyte Solution | DEC Content (volume%) of Electrolyte Solution | Capacity Retention(%) After 250 cycles |
|---|---|---|---|---|
| Example 1 | A1 | 30 | 70 | 94.0% |
| Example 6 | A6 | 20 | 80 | 89.0% |
| Example 7 | A7 | 10 | 90 | 91.4% |
| Example 8 | A8 | 50 | 50 | 82.8% |

It is evident from Table 3 and Figure 3 that the batteries A1 and A6 - A8 in accordance with the present invention all show improved charge-discharge cycle characteristics. It is also evident that, among them, the batteries using the electrolyte solutions having the EC content by volume of 10 - 30 % show particularly improved charge-discharge cycle characteristics.

(EXPERIMENT 2)

The batteries A1 (Example 1), X1 (Comparative Example 1) and X2 (Comparative Example 2), all constructed in Experiment 1, were operated with an end-of-charge voltage of 4.2 V, instead of 4.4 V. Otherwise, the procedure of Experiment 1 was followed to evaluate charge-discharge cycle characteristics. The evaluation results are shown in Table 4.

Table 4

| | Battery | Zr Content (mole%) of Positive Active Material | Mg Content (Mole%) of Positive Active Material | Capacity Retent i on (%) After 100 cycles |
|---|---|---|---|---|
| Example 1 | A1 | 0.5 | 0.5 | 96.6 |
| Comparative Example 1 | X1 | 0 | 0 | 95.1 |
| Comparative Example 2 | X2 | 1.0 | 0 | 96.1 |

As can be clearly seen from the results shown in Table 4, the difference in capacity retention between the battery A1 in accordance with the present invention and the comparative battery X1 or X2 is smaller in this experiment where the end-of-charge voltage is prescribed at 4.2 V than in the previous experiment 1 where the end-of-charge voltage was prescribed at 4.4V. However, the battery A1 apparently shows a better capacity retention than the comparative batteries X1 and X2. In this Experiment, the cycle test was discontinued after 100 cycles. It is however apparent from Figure 1 that the aforementioned difference increases with the number of cycles. Accordingly, the difference in capacity retention between the battery A1 and the comparative battery X1 or X2 is likely to become larger when the number of cycles is further increased.

(Microscopic Observation)

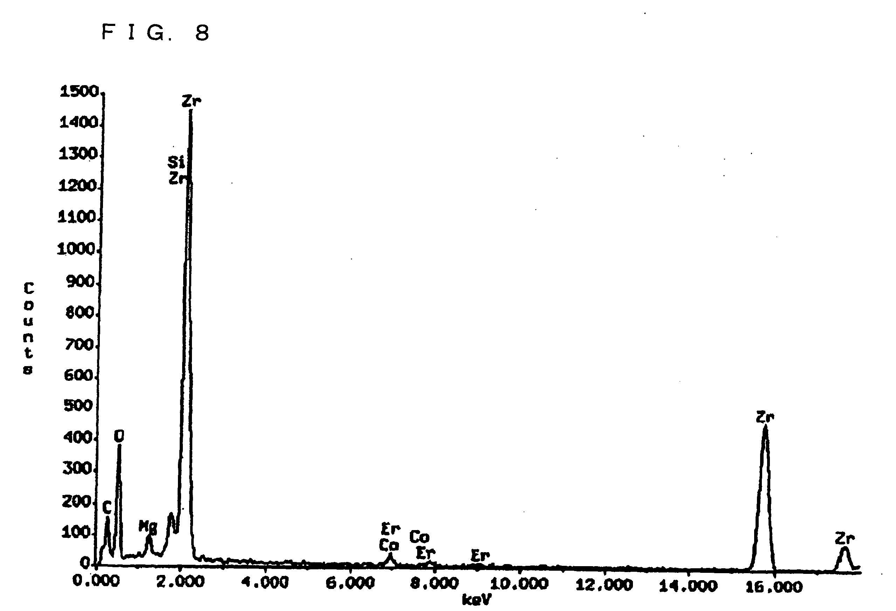

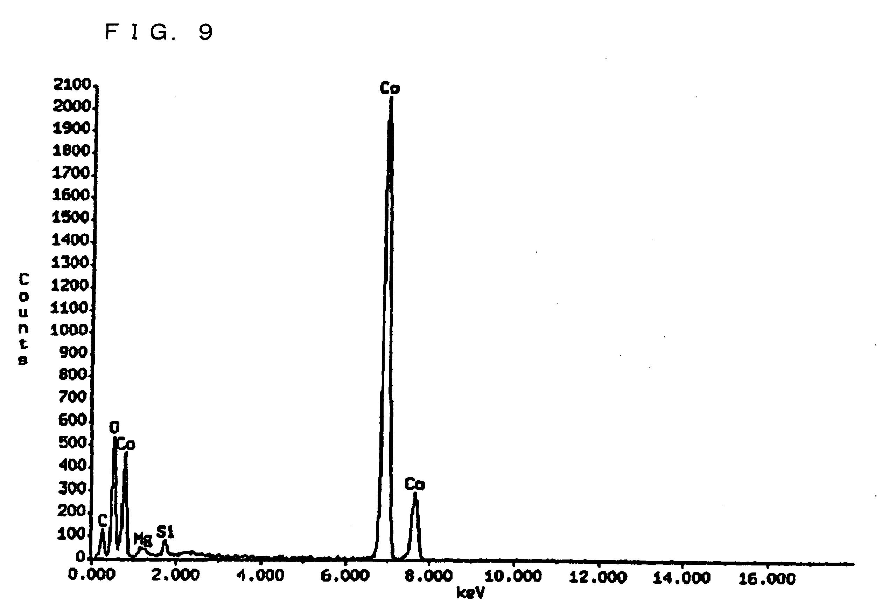

The respective positive active materials used in Examples 1 and 4 and Comparative Example 2 were observed with an electron microscope.

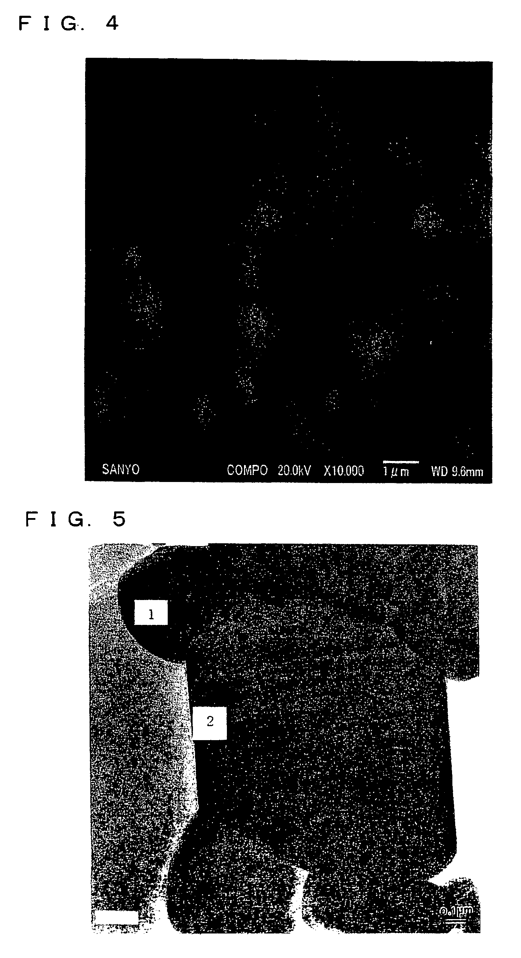

Figure 4 shows an SEM reflection electron image of the positive active material used in Example 1 and Figure 5 shows a TEM image of the positive active material used in Example 1. As apparent from Figures 4 and 5, small particles adhere to a surface of a large particle.
The metal element contents in the TEM image shown in Figure 5 were qualitatively evaluated by EDS (energy dispersive spectroscopy). The EDS measurement results are shown in Figures 8 and 9. Figure 8 shows an EDS measurement result for spot 1 in Figure 5 and Figure 9 shows an EDS measurement result for spot 2 in Figure 5. As can be clearly seen from Figures 8 and 9, Co is little detected at spot 1 and Zr is not detected at spot 2 in the TEM image shown in Figure 2. This demonstrates that the adhered particle at spot 1 comprises a Zr-containing compound and the particle at spot 2 comprises Zr-free $LiCoO_2$. That is, particles composed of the Zr-containing compound adhere to a particle surface of lithium cobaltate. As can be seen from Figure 4, a major portion (at least 80%) of the lithium cobaltate particle surface is exposed.
As can also be clearly seen from Figures 8 and 9, Mg is detected at both spots 1 and 2. This demonstrates that Mg is contained, through diffusion, in both of the Zr-containing compound particles and lithium cobaltate particles.

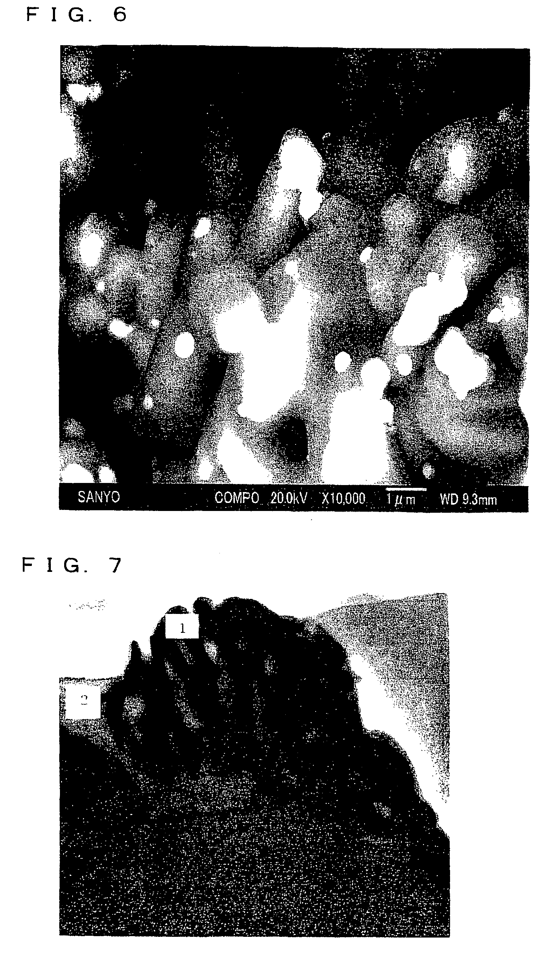

Figure 6 shows an SEM reflection electron image of the positive active material used in Example 4. As can be clearly seen from Figure 6, small particles adhere to a large particle as if they are contained therein. This demonstrates that in case of using Hf as the group IVA element, an Hf-containing compound exists in the form of particles adhered to a particle surface of lithium cobaltate, as similar to the case of using Zr.

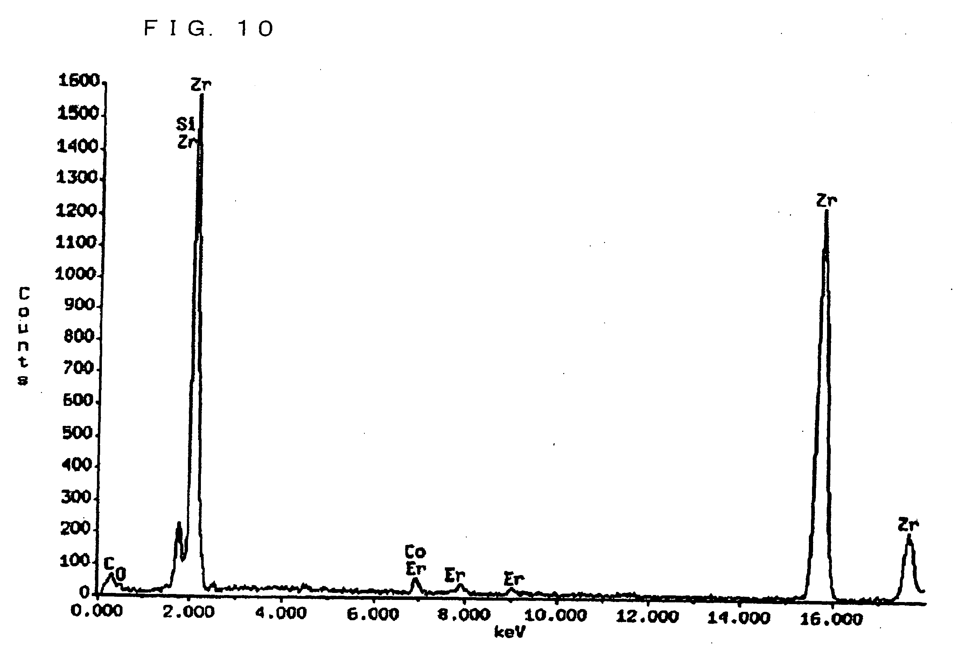

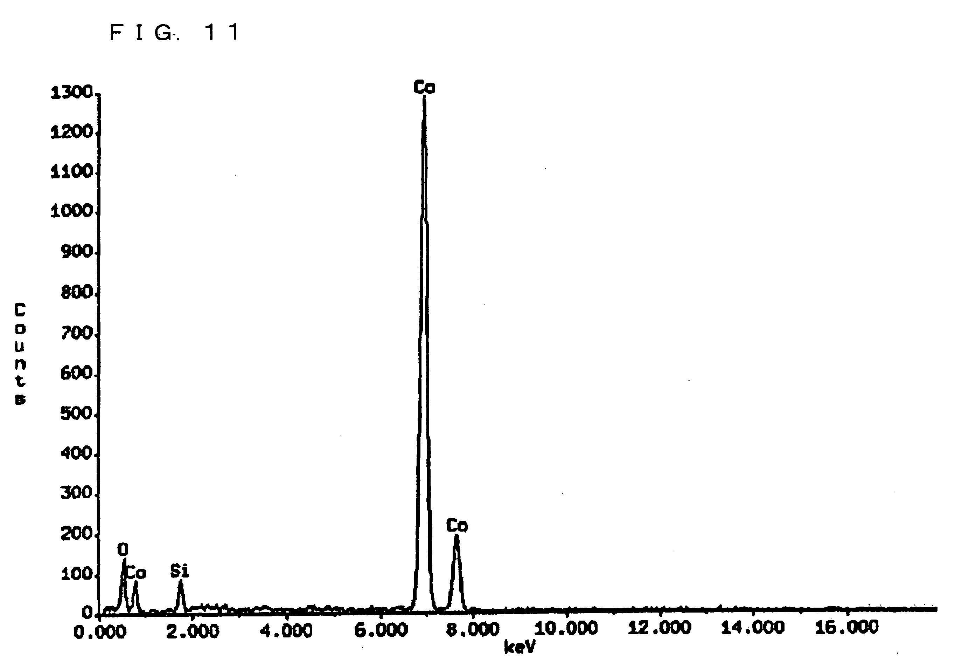

Figure 7 shows an SEM reflection electron image of the positive active material used in Comparative Example 2. Figure 10 shows an EDS measurement result for spot 1 in Figure 7 and Figure 11 shows an EDS measurement result for spot 2 in Figure 7.
Also in Comparative Example 2 where Mg is precluded, small particles 1 adhere to a surface of a large particle 2, as can be clearly seen from Figure 7. It is evident from Figures 10 and 11 that Zr is present in spot 1 but not in spot 2. This demonstrates that even in the case where Mg is precluded, a Zr-containing compound exists in the form of particles adhered to a particle surface of lithium cobaltate. However, in the case where Mg is contained, the particles of the Zr-containing compound adhere more firmly to the surface, as can be clearly seen from comparison between Figures 5 and 7, demonstrating that they have been well sintered. It seems that such firm adherence of the Zr compound to the surface leads to the better cycle characteristics.

In accordance with the present invention, an end-of-charge voltage can be prescribed at 4.3 V or above without deterioration in charge-discharge cycle characteristics, so that a charge-discharge capacity can be increased.

**Claims**

1. In a nonaqueous electrolyte secondary battery including a positive electrode containing a positive active material, a negative electrode containing a negative active material and a nonaqueous electrolyte,
said secondary battery being **characterized in that** said positive active material comprises a lithium transition metal oxide containing Li and Co and having a layered structure and further comprises a group IVA element and a group IIA element of the periodic table.

2. The nonaqueous electrolyte secondary battery as recited in claim 1, **characterized in that** said group IVA element adheres as a compound to a surface of said lithium transition metal oxide.

3. The nonaqueous electrolyte secondary battery as recited in claim 2, **characterized in that** said compound of the group IVA element exists in the form of particles adhered to the surface of said lithium transition metal oxide.

4. The nonaqueous electrolyte secondary battery as recited in any one of claims 1 - 3, **characterized in that** said group IVA element is at least one of Zr, Ti and Hf and said group IIA element is Mg.

5. The nonaqueous electrolyte secondary battery as recited in any one of claims 1 - 3, **characterized in that** said group IVA element is Zr and said group IIA element is Mg.

6. The non aqueous electrolyte secondary battery as recited in any one of claims 1 - 5, **characterized in that** said group IVA element and group IIA element are contained substantially in the equimolar amounts.

7. The nonaqueous electrolyte secondary battery asrecited in any one of claims 1 - 6, **characterized in that** said positive active material comprises lithium cobaltate containing said group IVA element and group IIA element.

8. The nonaqueous electrolyte secondary battery as recited in any one of claims 1 - 7, **characterized in that** said group IVA element and group IIA element are contained in said positive active material in the total amount of not greater than 3 mole %, based on the total amount of the aforementioned elements and the transition metal in the lithium transition metal oxide.

9. The nonaqueous electrolyte secondary battery as recited in any one of claims 1 - 8, **characterized in that** said positive active material has a specific surface area of not greater than 1.0 $m^2/g$.

10. The nonaqueous electrolyte secondary battery as recited in any one of claims 1 - 9, **characterized in that** said positive active material and said negative active material other than metallic lithium are contained such that when an end-of-charge voltage is prescribed at 4.4 V, a ratio in charge capacity of the negative electrode to the positive electrode is 1.0 - 1.2.

11. The nonaqueous electrolyte secondary battery as recited in any one of claims 1 - 10, **characterized in that** said nonaqueous electrolyte contains a cyclic carbonate and a chain carbonate, as a solvent, and the cyclic carbonate content of the solvent is 10 - 30 % by volume.

12. The nonaqueous electrolyte secondary battery as recited in any one of claims 1 - 11, **characterized in that** said positive electrode contains, as an electrical conductor, a carbon material in the amount not to exceed 5 % of the total weight of the positive active material, the conductor and a binder.

13. A method of using a nonaqueous electrolyte secondary battery **characterized in that** a nonaqueous electrolyte secondary battery including a positive electrode containing a positive active material, a negative electrode containing a negative active material and a nonaqueous electrolyte is charged at an end-of-charge voltage of at least 4.3 V, said positive active material comprising a lithium transition metal oxide containing Li and Co and having a layered structure and further comprising a group IVA element and a group IIA element of the periodic table.

**14.** The method of using a nonaqueous electrolyte secondary battery as recited in claim 13, **characterized in that** said group IVA element adheres as a compound to a surface of said lithium transition metal complex oxide.

**15.** The method of using a nonaqueous electrolyte secondary battery as recited in claim 14, **characterized in that** said compound of the group IVA element exists in the form of particles adhered to the surface of said lithium transition metal complex oxide.

**16.** The method of using a nonaqueous electrolyte secondary battery as recited in any one of claims 13 - 15, **characterized in that** said group IVA element is at least one of Zr, Ti and Hf and said group IIA element is Mg.

**17.** The method of using a nonaqueous electrolyte secondary battery as recited in any one of claims 13 - 15, **characterized in that** said group IVA element is Zr and said group IIA element is Mg.

**18.** The method of using a nonaqueous electrolyte battery as recited in any one of claims 13 - 17, **characterized in that** said group IVA element and group IIA element are contained substantially in the equimolar amounts. metal complex oxide contains substantially the same amount of nickel and manganese.

FIG. 1

FIG. 2

FIG. 3

F I G. 4

SANYO       COMPO  20.0kV  X10.000  1 μm  WD 9.6mm

F I G. 5

F I G. 6

SANYO    COMPO  20.0kV  X10,000   1 μm    WD 9.3mm

F I G. 7

F I G. 8

EP 1 598 884 A1

F I G. 9

EP 1 598 884 A1

F I G. 1 0

F I G. 1 1

**EP 1 598 884 A1**

<table>
<tr><td colspan="2" style="text-align:center"><b>INTERNATIONAL SEARCH REPORT</b></td><td>International application No.<br>PCT/JP2004/000358</td></tr>
</table>

A. CLASSIFICATION OF SUBJECT MATTER
Int.Cl$^7$ H01M4/58, H01M4/02, H01M10/40, H01M4/62

According to International Patent Classification (IPC) or to both national classification and IPC

B. FIELDS SEARCHED

Minimum documentation searched (classification system followed by classification symbols)
Int.Cl$^7$ H01M4/00-4/04, H01M4/36-4/62, H01M10/40

Documentation searched other than minimum documentation to the extent that such documents are included in the fields searched

| | | |
|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2004-103566 A (Nichia Chemical Industries, Ltd.), 02 April, 2004 (02.04.04), Claims 1 to 8 (Family: none) | 1-12 |
| E,X | JP 2004-047437 A (Matsushita Electric Industrial Co., Ltd.), 12 February, 2004 (12.02.04), Claims 1 to 5; example 3 (Family: none) | 1-12 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07 May, 2004 (07.05.04) | Date of mailing of the international search report<br>25 May, 2004 (25.05.04) |
|---|---|
| Name and mailing address of the ISA/<br>    Japanese Patent Office | Authorized officer |
| Facsimile No. | Telephone No. |

Form PCT/ISA/210 (second sheet) (January 2004)

21

**INTERNATIONAL SEARCH REPORT**

| International application No. |
| --- |
| PCT/JP2004/000358 |

C (Continuation). DOCUMENTS CONSIDERED TO BE RELEVANT

| Category* | Citation of document, with indication, where appropriate, of the relevant passages | Relevant to claim No. |
| --- | --- | --- |
| P,X | JP 2003-221234 A  (The Nippon Chemical Industrial Co., Ltd.), 05 August, 2003 (05.08.03), Claims 1 to 7; Par. Nos. [0017] to [0024]; examples (Family: none) | 1-18 |
| P,X P,Y | JP 2003-109599 A  (Toshiba Corp., Toshiba Electronic Engineering Corp.), 11 April, 2003 (11.04.03), Claims 1 to 10; Par. Nos. [0021] to [0026]; examples 4, 6 & US 2002/127473 A1 | 1,4-13,16-18 2-12,14-18 |
| P,X P,Y | JP 2003-086181 A  (Toshiba Corp., Toshiba Electronic Engineering Corp.), 20 March, 2003 (20.03.03), Claims 4, 5; Par. Nos. [0026], [0027]; examples 6 to 10 (Family: none) | 1,4-13,16-18 2-12,14-18 |
| X Y | JP 11-092149 A  (FMC Corp.), 06 April, 1999 (06.04.99), Claims 1 to 4, 7; examples & US 6277521 A          & US 6582852 A | 1,4-13,16-18 2-12,14-18 |
| Y | JP 09-293536 A  (Seiko Instruments Inc.), 11 November, 1997 (11.11.97), Claims 1, 2 (Family: none) | 10 |
| A | JP 2003-500318 A  (Merck Patent GmbH.), 17 January, 2003 (17.01.03), & WO 00/070694 A1          & EP 1188196 A | 1-18 |
| A | JP 2002-164053 A  (Samsung SDI Kabushiki Kaisha), 07 June, 2002 (07.06.02), (Family: none) | 1-18 |
| A | JP 2001-351624 A  (Hitachi Maxell, Ltd., Hitachi, Ltd.), 21 December, 2001 (21.12.01), (Family: none) | 1-18 |
| A | JP 2001-052704 A  (Hitachi, Ltd.), 23 February, 2001 (23.02.01), (Family: none) | 1-18 |
| A | JP 08-250120 A  (Sanyo Electric Co., Ltd.), 27 September, 1996 (27.09.96), (Family: none) | 1-18 |

Form PCT/ISA/210 (continuation of second sheet) (January 2004)